# FASCICULE DE BREVET EUROPEEN

(11) **EP 1 857 893 B1**
(45) Date de publication et mention de la délivrance du brevet: **16.12.2009**
(21) Numéro de dépôt: 06114174.3
(22) Date de dépôt: 18.05.2006
(51) Int. Cl.: G04G 19/12, G04C 3/14, G04C 11/02, G04C 10/00

(54) **Affichage analogique et horloge pour véhicule automobile**
Analoge Anzeige und Uhr für Kraftfahrzeuge
Analogue display and clock for automobile

(43) Date de publication de la demande: 21.11.2007
(73) Titulaire: Microcomponents AG, 2540 Grenchen/Granges (CH)
(72) Inventeur: Strahm, Martin, 2017 Boudry (CH); Gallet, Laurent, 2000 Neuchâtel (CH); Tinguely, Xavier, 2056 Dombresson (CH)
(74) Mandataire: Vigand, Philippe

(56) Documents cités:
- EP-A- 0 560 321
- EP-A- 0 591 557
- DE-A1- 4 424 337
- US-A1- 2005 105 400

## Description

### DOMAINE TECHNIQUE

La présente invention concerne, de manière générale, une montre électronique à affichage analogique ou d'autres affichages à aiguilles destinée à être intégrée dans le tableau de bord d'un véhicule automobile, et plus particulièrement à une méthode de synchronisation électromécanique entre l'affichage analogique et le compteur de temps de la montre.

### ARRIERE-PLAN TECHNOLOGIQUE

Il est connu dans l'art antérieur des dispositifs de remise à l'heure de montre électronique permettant d'assurer un certain synchronisme électromécanique. Une telle montre électronique destinée à être intégrée sur un tableau de bord d'un véhicule automobile, comprend des moyens d'affichage analogiques composés d'une aiguille des heures et d'une aiguille des minutes entraînées par un moteur pas à pas. Le moteur pas à pas utilisé dans de telles montres électroniques est généralement constitué d'un rotor aimanté, d'un stator et d'une bobine qui lorsqu'elle est mise sous tension crée un champ magnétique dans le stator qui se transforme en aimant dont la polarité dépend du sens du courant dans la bobine. A chaque impulsion reçue de la base de temps, le rotor effectue un pas entraînant les rouages et les aiguilles de la montre de manière classique.

Une telle montre électronique comprend encore une source d'alimentation, des moyens de comptage du temps fonctionnant en synchronisme avec les moyens d'affichage pour une alimentation suffisante et des moyens de détection d'une insuffisance d'alimentation. Lors de la détection d'une insuffisance d'alimentation, les aiguilles sont arrêtées et la valeur correspondante (heures, minutes) des moyens de comptage est alors stockée dans des moyens de mémorisation non volatiles.

Une telle montre suivant le préambule de revendication 1 est connue du document EP-A-0 591 557 ainsi que du document DE 44 24 337 A1. Les moyens de mémorisation des montres connues de ces documents sont en outre prévus pour contenir une information additionnelle concernant la polarité du champ.

Néanmoins, il a été mis en évidence dans le cadre de la présente invention, qu'une telle méthode de synchronisation n'était pas suffisamment fiable au cours du temps. En effet, le type de moteur pas à pas décrit ci-dessus présente lorsqu'il n'est pas alimenté au moins deux positions magnétiquement stables de part sa géométrie. Ainsi, à chaque insuffisance d'alimentation, l'arrêt du moteur entraîne très souvent une perte d'information horaire dans la mesure où le moteur n'est statistiquement pas dans une de ces positions magnétiques stables lors son arrêt et que suite à cet arrêt il retourne inévitablement dans l'une de ses positions magnétiquement stables. Suivant la démultiplication appliquée entre un pas du moteur et l'information d'une minute, le cumul de ces erreurs peut dépasser plusieurs minutes et devenir inacceptable pour fournir une information horaire correcte.

Certaines solutions de l'art antérieur préconisent l'utilisation de détecteurs de positions des aiguilles pour calculer et corriger cette erreur entre la position réelle des aiguilles et celles indiquées dans les moyens de comptage du temps. De telles solutions souvent complexes ne sont en outre pas forcément très fiables.

### RESUME DE L'INVENTION

L'un des buts principaux de la présente invention est de pallier aux inconvénients susmentionnés au moyen d'une montre électronique pourvue de moyens assurant une synchronisation électromécanique fiable prenant en compte le type de moteur pas à pas utilisé. A cet effet, un premier objet de l'invention concerne une montre électronique suivant la revendication 1.

Un deuxième objet de la présente l'invention concerne une méthode de synchronisation électromécanique fiable d'une telle montre électronique suivant la revendication 3.

Un mode de réalisation avantageu est donné avec la revendication dépendante.

### BREVE DESCRIPTION DES FIGURES

D'autres caractéristiques et avantages de la présente invention apparaîtront plus clairement à la lecture de la description détaillée qui suit de modes de réalisation de l'invention donnés uniquement à titre d'exemple non limitatif et illustrés par les dessins annexés où :
- la figure 1 représente une vue d'ensemble d'une montre électronique selon un mode de réalisation de la présente invention;
- la figure 2 représente une vue schématique d'un moteur pas à pas présentant un axe magnétique d'aimantation Nord-Sud définissant deux positions magnétiques stables;
- les figures 3a et 3b représentent des vues schématiques du rotor dans l'une et l'autre des positions magnétiques stables après la détection d'une insuffisance d'alimentation;
- la figure 4 représente un diagramme de la procédure de sauvegarde de la synchronisation électromécanique selon l'invention.

### DESCRIPTION DETAILLEE DE L'INVENTION

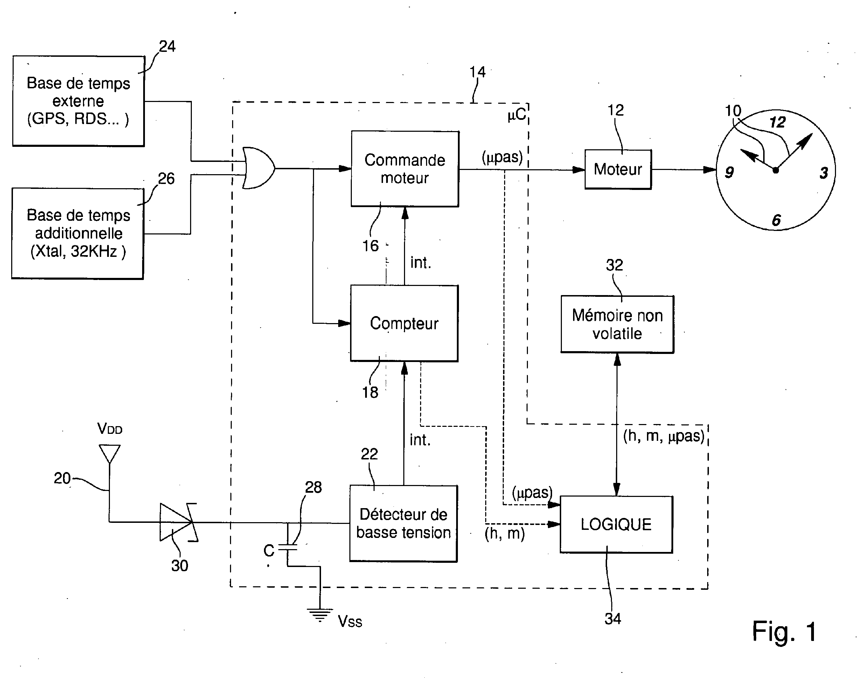

Les divers modes de réalisation qui vont maintenant être présentés sont donnés à titre purement illustratif et non limitatif. La figure 1 représente une vue d'ensemble d'une montre électronique selon un mode de réalisation préféré de la présente invention.

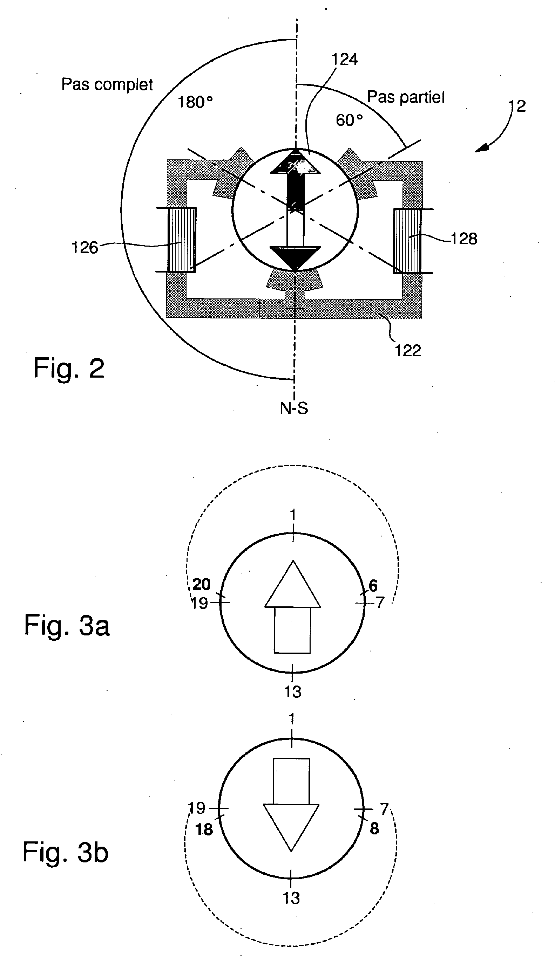

Cette montre électronique comprend des moyens d'affichage analogiques 10 comprenant de préférence deux aiguilles, à savoir une aiguille des heures et une aiguille des minutes. Ces moyens d'affichage analogiques 10 sont actionnés au moyen d'un moteur pas à pas 12 qui sera présenté plus en détail en rapport avec les figures 2, 3a et 3b. Ce moteur pas à pas 12 est composé de manière traditionnelle par un rotor, un stator et au moins une bobine. Le rotor aimanté est monté sur un pignon qui entraîne les rouages de la montre reliés aux aiguilles de l'affichage. Des mobiles de démultiplication avec des rapports de 1:60 et 1:12 permettent respectivement d'entraîner l'aiguille des minutes et l'aiguille des heures.

La montre comprend un circuit microcontrôleur 14 comprenant des moyens de commande et d'entraînement du moteur 16 pour en commander l'avance, un compteur de temps volatile 18, par exemple une mémoire RAM, pour contenir une information horaire mise à jour périodiquement lorsque la tension d'alimentation du microcontrôleur 14 est suffisante pour un bon fonctionnement de la montre électronique. A cet effet, le microcontrôleur 14 est alimenté au moyen d'une source d'alimentation principale 20, par exemple la batterie régulée d'un véhicule automobile en ce qui concerne une montre électronique intégrée dans un tel véhicule ou encore toute source d'alimentation régulée. Le microcontrôleur 14 comprend également un détecteur de basse tension 22 permettant de détecter lorsque la tension d'alimentation fournie par la source d'alimentation principale n'est plus suffisante pour assurer un bon fonctionnement de la montre électronique.

On notera encore que le microcontrôleur 14 comprend un oscillateur interne, non représenté, pour son cadencement propre. La fréquence de travail de l'oscillateur après division de fréquence est choisie avantageusement de sorte qu'elle soit supérieure aux fréquences audibles par certains animaux de compagnie pouvant voyager dans un véhicule automobile. Dans ce but, la fréquence de travail du microcontrôleur est choisie de préférence à 32 KHz.

La montre électronique comprend encore au moins une base de temps ou alternativement des moyens de réception d'une information horaire provenant d'une base de temps externe 24. L'information horaire reçue est d'une part affichée de manière analogique et d'autre part contenue de manière électrique dans le compteur 18, le compteur 18 et les aiguilles 10 fonctionnant de manière synchrone. Avantageusement, il est prévu que la montre comprend une base de temps additionnelle 26 composée d'un oscillateur à quartz et de diviseurs de fréquence fournissant une information horaire et en supplément des moyens de réception d'une autre information horaire exacte provenant d'une base de temps externe 24 pouvant être obtenue par exemple par le biais d'un récepteur GPS ou encore RDS.

L'information horaire mise à jour dans le compteur de temps 18 de la montre est avantageusement celle provenant de la base de temps externe 24 jugée exacte. Toutefois en l'absence de réception des signaux contenant cette information horaire exacte en provenance de cette base de temps externe 24, il est prévu que le microcontrôleur 14 utilise alors en remplacement l'information horaire fournie par la base de temps additionnelle 26.

Comme mentionné un peu plus haut, le microcontrôleur 14 comprend des moyens de détection d'une basse tension 22, encore appelé moyens de détection d'une insuffisance d'alimentation. Ces moyens de détection 22 comparent la tension d'alimentation reçue par la source d'alimentation principale 20 avec une tension de référence déterminée suffisante pour garantir un fonctionnement correct de la montre électronique. Dès lors qu'une insuffisance d'alimentation est détectée, la montre entre de manière prioritaire sur tout autre mode de fonctionnement dans un mode de fonctionnement appelé mode basse consommation dans lequel le compteur 18 n'est plus incrémenté et les moyens de commande et d'entraînement du moteur 16 sont désactivés (par le biais du signal "int") et par voie de conséquence le moteur 12 et les aiguilles 10 sont arrêtés. La détection d'une telle insuffisance d'alimentation dans l'exemple d'une montre alimenté par la batterie d'un véhicule automobile pourrait par exemple se produire au moment du changement de la batterie du véhicule ou de la fin de vie de cette dernière. Ainsi, l'alimentation fournie par la source principale 20 étant par définition insuffisante pour assurer le bon fonctionnement de la montre général et du microcontrôleur 14 en particulier, il est prévu une source d'alimentation additionnelle, comme par exemple un buffer d'énergie comme un condensateur 28 branché aux bornes de l'alimentation et donc pleinement chargé lors d'une détection d'insuffisance d'alimentation, et ayant une capacité C choisie pour fournir suffisamment d'énergie aux opérations nécessaires pour assurer un synchronisme électromécanique fiable entre la position réelle des aiguilles 10 et l'information horaire correspondante dans le compteur 18. Une diode zener 30 est placée entre la source d'alimentation principale 20 et le condensateur 28 de manière à éviter toute décharge de ce dernier une fois l'alimentation principale devenue insuffisante.

Suite à la détection de l'insuffisance de l'alimentation fournie par la source principale 20, la charge stockée dans le condensateur 28 est alors utilisée pour fournir l'énergie nécessaire à l'écriture dans une mémoire non volatile 32 (comme par exemple une EEPROM) de l'information horaire contenue dans le compteur de temps 18 volatile. Toutefois, comme cela a été mis en évidence dans le cadre de la présente invention, le stockage uniquement de l'information horaire ne suffit pas à assurer un synchronisme électromécanique fiable entre la position réelle des aiguilles 10 et l'information horaire correspondante dans le compteur 18. C'est pourquoi, l'énergie fournie par la source d'alimentation additionnelle est prévue en outre pour permettre l'écriture d'une information de la position du moteur lors de la détection de l'insuffisance d'alimentation. L'information de position du moteur fournie par les moyens de commande et d'entraînement du moteur 16 est copiée dans la mémoire non volatile 32 par le biais de la logique 34 du microcontrôleur 14. Cette information de position du moteur va être maintenant décrite plus en détail en rapport avec les figures 2, 3a et 3b.

Comme cela a été mentionné précédemment, il est prévu pour commander l'avance des aiguilles de la montre d'utiliser un moteur pas à pas 12, dont un exemple est donné à la figure 2 représentant schématiquement un tel moteur pas à pas présentant un axe magnétique d'aimantation Nord-Sud. Les alvéoles sur le stator 122 permettent de définir deux positions magnétiques stables du rotor 124 dans l'une desquels le rotor vient se placer lorsque le stator n'est pas aimanté, c'est-à-dire lorsque le courant dans la (ou les) bobine(s) 126 (et 128) est coupé.

Selon un exemple particulier de réalisation, une révolution complète du rotor 124 correspond à un déplacement d'une minute de l'aiguille des minutes soit à un déplacement de 6° de cette aiguille. Il est prévu que le rotor effectue deux pas complets, durant une révolution complète, chaque pas complet correspondant à un déplacement de 3° de l'aiguille de minutes. Un déplacement de 1° de cette même aiguille des minutes permet de définir un pas partiel du rotor, correspondant à un rotation de 60° de ce dernier.

Lors du fonctionnement normal de la montre, c'est-à-dire lorsque la tension d'alimentation fournie est suffisante, le moteur est commandé de manière à effectuer 24 micropas par rotation complète du rotor et par voie de conséquence 24 positions intermédiaires par minute pour l'aiguille des minutes.

Comme cela est visible sur les figures 3a et respectivement 3b, la première position stable est définie arbitrairement comme correspondant au pas n°1, et respectivement la deuxième position stable est définie arbitrairement comme correspondant au micropas n°13. Si l'on considère un micropas du rotor, il équivaut selon les considérations faites ci-dessus, à 1/4° de déplacement de l'aiguille des minutes, soit 4 micropas pour un déplacement de 1°.

Considérons maintenant la figure 3a. Toutes les positions du rotor définies par les micropas entre les micropas n°20 et n°6 inclus (i.e. micropas n°20-24 et n°1-6) sont des positions à partir desquelles le rotor ira dans la position stable définie par le micropas n°1 lors d'une insuffisance / coupure d'alimentation.

Inversement, si l'on considère la figure 3b, toutes les positions du rotor définies par les micropas entre les micropas n°8 et n°18 inclus sont des positions à partir desquelles le rotor ira dans la position stable définie par le micropas n°13 lors d'une insuffisance / coupure d'alimentation.

Ainsi, suivant la position exacte dans laquelle est le rotor lors de la détection d'une insuffisance d'alimentation, et sachant que le rotor retournera automatiquement dans l'une de ces deux positions stables (n°1 ou n°13) après coupure du moteur, l'information susceptible d'être perdue varie entre 0 à 6 micropas soit entre 0 à 1,5° ou encore entre 0 et 15 secondes.

On remarquera ici que si le moteur est coupé lorsque le rotor se trouve dans la position définie par les micropas n°7 ou n°19, alors il ira aléatoirement dans l'une ou l'autre des positions stables définies par les micropas n°1 et n°13. C'est pourquoi, il est prévu de choisir arbitrairement celle dans laquelle il est censé être allé pour effectuer la remise à l'heure exacte.

On notera encore, que la vitesse du moteur est choisie de préférence maximale, de sorte à éviter de perdre un pas en cours de réalisation lors de la détection d'une insuffisance / coupure d'alimentation, ce qui serait dû à un manque d'inertie du moteur.

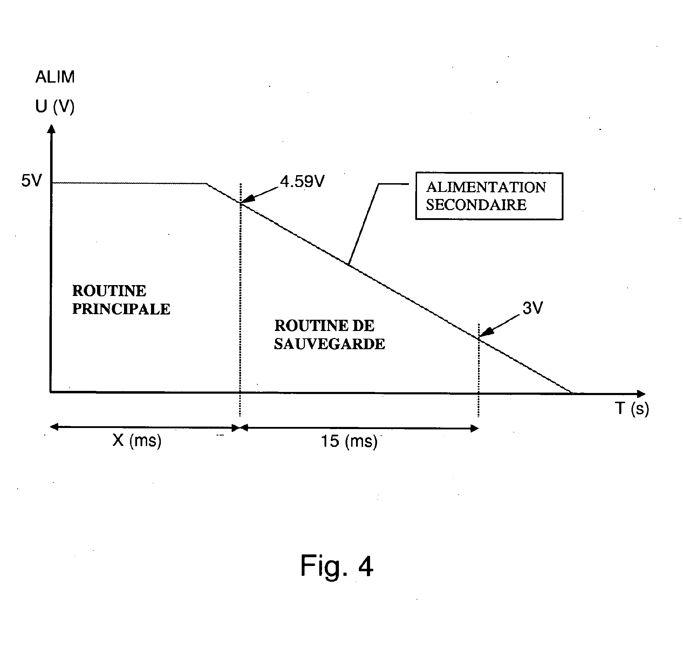

La figure 4 représente un diagramme de la procédure de sauvegarde de la synchronisation électromécanique selon l'invention.

Dans un mode de fonctionnement principal (Main), le système vérifie si un signal externe d'horloge (par exemple GPS) est présent, alors le microcontrôleur. après lecture des signaux reçus, incrémente les valeurs du compteur de temps et commande les impulsions du moteur, les aiguilles indiquant l'heure reçue par ces signaux étant déplacées en synchronisme.

En cas d'absence des signaux d'horloge externes, le système active un mode autonome par le biais d'une routine (Stand Alone) et dans le même temps utilise une horloge interne pour le décompte du temps et la commande du moteur ainsi que la mise à jour des informations heures, minutes et micropas.

En cas de détection d'une insuffisance d'alimentation, le système passe dans un mode basse consommation (Low Power Mode) défini dans une routine prioritaire sur tous les autres modes. Dans ce mode basse consommation, le moteur pas-à-pas est arrêté et les informations heures, minutes et micropas sont sauvegardées dans une mémoire non volatile (p. ex. EEPROM).

Lorsque l'alimentation redevient suffisante, par exemple lorsque la batterie du véhicule a été remplacée, la montre remet le système à l'heure aux moyens de l'information horaire exacte obtenue par la base de temps externe.

On comprendra que diverses modifications et / ou améliorations et / ou combinaisons évidentes pour l'homme du métier peuvent être apportées aux différents modes de réalisation de l'invention exposés ci-dessus sans sortir du cadre de l'invention défini par les revendications annexées. On notera par exemple qu'un rotor peut avoir plusieurs axes d'aimantation suivant la conception du moteur et ainsi définir un multiple de deux positions stables.

## Revendications

1. Montre électronique comprenant des moyens d'affichage analogiques constitués d'au moins une aiguille (10) entraînée par un moteur pas à pas (12) comprenant un rotor (124) aimanté comportant deux positions magnétiques stables par rapport au stator (122), au moins une base de temps (24, 26) pour fournir une information horaire (h, m) à des moyens de commande et d'entraînement (16) dudit moteur pas à pas (12), une source d'alimentation principale (20), des moyens de détection (22) d'une insuffisance d'alimentation de ladite source d'alimentation principale (20), des moyens de mémorisation non volatiles (32) alimentés par une source d'alimentation additionnelle (28), pour contenir, lors de ladite détection d'une insuffisance d'alimentation, ladite information horaire ainsi qu'une information sur la position angulaire du rotor (124) par rapport à ses deux positions magnétiquement stables, **caractérisée en ce que** ledit rotor (124) comporte un nombre défini de positions intermédiaires par rapport aux deux positions magnétiquement stables, chacune desdites positions intermédiaires étant numérotée et correspondant à un nombre de micropas du moteur entre deux passages par lesdites positions magnétiques stables, **et en ce que** ladite information de position angulaire du rotor (124) contenue dans les moyens de mémorisation non volatiles (32) correspond au dernier numéro de micropas effectué par le moteur (12).

2. Montre électronique selon la revendication 1, comprenant des moyens de réception d'une information horaire exacte d'une première base de temps externe (24), et une deuxième base de temps additionnelle (26) fournissant une information utilisée uniquement lorsque ladite information horaire exacte n'est pas reçue.

3. Méthode de synchronisation électromécanique de ladite au moins une aiguille et de l'information horaire exacte pour une montre électronique selon l'une quelconque des revendications précédentes, comprenant les étapes consistant à:
- détecter une insuffisance d'alimentation de la source d'alimentation principale;
- arrêter le moteur de la montre;
- utiliser un buffer d'énergie comme un condensateur comme source d'alimentation.
- écrire dans les moyens de mémorisation non volatiles l'information horaire lors de la détection de l'insuffisance d'alimentation; **caractérisée en ce que** la méthode comprend en outre une étape additionnelle consistant à:
- écrire dans les moyens de mémorisation non volatiles une information sur la position angulaire du rotor par rapport à ses deux positions magnétiques stables lors de ladite détection d'insuffisance d'alimentation, cette information correspondant au dernier numéro de micropas effectués par le moteur.

## Claims

1. Electronic watch including analogue display means formed of at least one hand (10) driven by a stepping motor (12) including a magnetised rotor (124) including two stable magnetic positions relative to the stator (122), at least one time base (24, 26) for providing time data (h, m) to means (16) for controlling and driving said stepping motor, a main power source (20), means (22) for detecting a lack of sufficient power from said main power source (20), non volatile storage means (32) powered by an additional power source (28), for containing, upon detection of a lack of sufficient power, said time data as well as an information on the angular position of the rotor (124) with respect to its two stable magnetic positions, **characterized in that** said rotor (124) includes a defined number of intermediate positions with respect to its two stable magnetic positions, each of said intermediate positions being numbered and corresponding to the number of microsteps of the motor between two passages through said stable magnetic positions, and **in that** said information on the angular position of the rotor (124) contained in the non-volatile storage means (32) corresponds to the last number of microsteps made by the motor (12).

2. Electronic watch according to claim 1, including means for receiving true time data from a first external time base (24), and a second additional time base (26) supplying data used only when said true time data is not received.

3. Method of electromechanical synchronisation of said at least one hand and the true time data for an electronic watch according to any of the preceding claims, including the steps of:
- detecting a lack of sufficient power from the main power source;
- stopping the watch motor;
- using an energy buffer like a capacitor as power source;
- writing the time data in the non-volatile storage means when a lack of sufficient power is detected;
**characterized in that** the method further includes the additional step of:
- writing in the non-volatile storage means an information on the angular position of the rotor (124) with respect to its two stable magnetic positions upon detection of a lack of sufficient power, wherein this information corresponds to the last number of microsteps made by the motor.

## Patentansprüche

1. Elektronische Uhr, die analoge Anzeigemittel, die aus wenigstens einem Zeiger (10) gebildet sind, der durch einen Schrittmotor (12) angetrieben wird, der einen magnetischen Rotor (124) enthält, der zwei stabile magnetische Positionen in Bezug auf den Stator (122) besitzt, wenigstens eine Zeitbasis (24, 26), um eine Zeitinformation (h, m) für Steuer- und Antriebsmittel (16) des Schrittmotors (12) zu liefern, eine Hauptversorgungsquelle (20), Mittel (22) zum Erfassen einer unzureichenden Versorgung der Hauptversorgungsquelle (20) und nichtflüchtige Speichermittel (32), die durch eine zusätzliche Versorgungsquelle (28) versorgt werden, um bei Erfassung einer unzureichenden Versorgung die Zeit-informationen sowie eine Information bezüglich der Winkelposition des Rotors (124) in Bezug auf seine zwei magnetisch stabilen Positionen zu halten, umfasst, **dadurch gekennzeichnet, dass** der Rotor (124) eine definierte Anzahl von Zwischenpositionen in Bezug auf die zwei magnetisch stabilen Positionen besitzt, wobei jede der Zwischenpositionen nummeriert ist und einer Anzahl von Mikroschritten des Motors zwischen zwei Durchgängen durch die magnetisch stabilen Positionen entspricht, **und dass** die Winkelpositionsinformation des Rotors (124), die in den nichtflüchtigen Speichermitteln (32) enthalten ist, der Nummer des letzten Mikroschritts entspricht, der von dem Motor (12) ausgeführt wird.

2. Elektronische Uhr nach Anspruch 1, die Mittel zum Empfangen einer exakten Zeitinformation von einer ersten externen Zeitbasis (24) und eine zweite, zusätzliche Zeitbasis (26), die eine Information liefert, die ausschließlich dann verwendet wird, wenn die exakte Zeitinformation nicht empfangen wird, umfasst.

3. Verfahren zum elektromechanischen Synchronisieren des wenigstens einen Zeigers mit den exakten Zeitinformationen für eine elektronische Uhr nach einem der vorhergehenden Ansprüche, das die Schritte umfasst, die darin bestehen:
- eine unzureichende Versorgung der Hauptversorgungsquelle zu erfassen;
- den Motor der Uhr anzuhalten;
- einen Energiepuffer wie etwa einen Kondensator als Versorgungsquelle zu verwenden;
- in die nichtflüchtigen Speichermittel die Zeitinformation bei der Erfassung der unzureichenden Versorgung zu schreiben; **dadurch gekennzeichnet, dass** das Verfahren außerdem einen zusätzlichen Schritt umfasst, der darin besteht:
- in die nichtflüchtigen Speichermittel eine Information bezüglich der Winkelposition des Rotors in Bezug auf seine zwei magnetisch stabilen Positionen bei der Erfassung der unzureichenden Versorgung zu schreiben, wobei diese Information der Nummer des letzten Mikroschritts, der von dem Motor ausgeführt wird, entspricht.
